# EUROPEAN PATENT SPECIFICATION

(11) **EP 3 842 399 B1**
(45) Date of publication and mention of the grant of the patent: **15.11.2023**
(21) Application number: 20217138.5
(22) Date of filing: 23.12.2020
(51) Int. Cl.: C04B 18/14

(54) **METHOD FOR PRODUCING AN ALKALINE AGGREGATE**
VERFAHREN ZUR HERSTELLUNG EINES ALKALISCHEN AGGREGATS
PROCÉDÉ DE PRODUCTION D'UN AGRÉGAT ALCALIN

(30) Priority: 24.12.2019 BE 201905984
(43) Date of publication of application: 30.06.2021
(73) Proprietor: ORBIX SOLUTIONS, 6240 Farciennes (BE); ORBIX Productions, 3600 Genk (BE)
(72) Inventor: VAN DESSEL, Thierry, 3720 Kortessem (BE); MEO, Robin, 3990 Peer (BE); SANTERMANS, Greet, 3600 Genk (BE); RIJSKENS, Sven, 6240 Farciennes (BE); VAN MECHELEN, Dirk, 2830 Tisselt (BE)
(74) Representative: Gevers Patents

(56) References cited:
- JP-A- 2006 188 381
- US-A1- 2009 260 542

## Description

The present invention relates to a method for producing an alkaline aggregate with a swelling percentage smaller than 1.5%, preferably smaller than 1.0%, as determined according to standard NBN EN 1744-1 (2013), article 19.3. The method comprises the steps of providing a granular alkaline material which comprises a granular steel-making slag material which is different from a blast furnace slag and which contains free oxides of calcium and/or magnesium and ageing at least a portion of this material by treating it with water to hydrate at least part of said free oxides contained therein to reduce the swelling percentage of the granular alkaline material to a value smaller than 1.5% or even to a value smaller than 1.0%.

The alkaline material is in particular a by-product. The alkaline material may comprise bottom ash, in particular municipal solid waste incineration bottom ash (MSWI bottom ashes), and/or a steel-making slag material, in particular a stainless steel-making slag material. Both bottom ashes and steel-making slag materials contain free oxides which may cause swelling of the material.

During the production of steel, in particular of carbon steel and of stainless steel, large amounts of by-products are generated in particular in the form of steel slags. Steel-making slags are classified according to the manufacturing process wherein they were obtained. The production of carbon steel (also known as common steel) produces in particular electric arc furnace slags (EAF slags), basic oxygen furnace slags (BOF slags) and ladle metallurgy slags (LM slags). The BOF slags include in particular LD slags which are obtained as by-product in the production of steel by the Linz-Donawitz process. Stainless steel-making slags are obtained during the production of stainless steel and contain chromium, and optionally also other alloying elements such as nickel. Stainless steel making slags include electric arc furnace slags (EAF slags), argon oxygen decarburization slags (AOD slags), vacuum oxygen decarburation slags (VOD slags) and ladle metallurgy slags (LM slags).

Therefore, steel-making slags include common steel slags as well as stainless steel slags. Common steel slags comprise electric arc furnace slags (EAF slags), basic oxygen furnace slags (BOF slags), LD slags and ladle metallurgy slags (LM slags). Stainless steel slags comprise electric arc furnace slags (EAF slags), argon oxygen decarburization slags (AOD slags), vacuum oxygen decarburation slags (VOD slags) and ladle metallurgy slags (LM slags). In particular, the term "steel-making slag", as used herein, excludes slags generated during the production of pig iron, such as blast furnace slags.

The granular alkaline material moreover has to contain free oxides of calcium and/or magnesium and has therefore to swell in the presence of water. Slags granulated with water, such as granulated blast furnace slags, are mainly amorphous and do not contain in general free oxides, as can be seen from the table on pages 6-7 of EP 0 542 330 B1, and are therefore not subjected to any swelling. Such slags may however be subjected to caking. JP 2006 188381 describes methods for reducing caking of granulated blast furnace slags through the addition of anti-caking agents to said slags. Since the granulated blast furnace slags as such do not swell, this treatment doesn't reduce the swelling percentage thereof.

In order to limit the economic and environmental impact of slags, methods have been developed to convert them into economically exploitable materials. The majority of these slags are used in civil engineering and road building. Owing to the mineralogical and chemical composition of these slags and to their physical properties, however, further processing steps are needed before they can be utilized.

The main constituents of steel-making slags are silicon dioxide (SiO₂), calcium oxide (CaO) and magnesium oxide (MgO). Most of these components are comprised in amorphous or crystalline silicate phases which are quite stable and which in particular do not react with water. However, a portion of the calcium and the magnesium oxides are present as free oxides. Free oxides are oxides that can react with water (neutral water, at atmospheric pressure and at 20°C) to produce the corresponding hydroxides. Free oxides include in particular free lime (i.e. free calcium oxide or unslaked lime), free magnesia (i.e. free magnesium oxide or unslaked magnesia) and free dolime (free calcium magnesium oxide containing varying amounts of calcium and magnesium).The use of slags in civil engineering, e.g. in the form of granular material in concrete or asphalt for road building, is limited by the free oxides of calcium and/or magnesium present therein. These oxides can hydrate in the presence of water, which is associated with a volume increase. As a result of the hydration process, the slag aggregate therefore swells. This leads to an undesirable expansion and cracking of the concrete or asphalt.

To reduce the content of free oxides of calcium and/or magnesium and thereby the swelling capacity of the material, slags, different from granulated blast furnace slags, are commonly crushed to produce an aggregate and subsequently treated with water. In practice, the crushed material is usually stored in the form of heaps which are sprayed with water for several months. Through the hydration process, calcium hydroxide (Ca(OH)₂), magnesium hydroxide (Mg(OH)₂) and/or calcium/magnesium hydroxides are formed, which are no longer subject to swelling, or only to a limited extent for example due to natural carbonation.

EP 1 146 022 discloses a method wherein stainless steel slags are used to produce an aggregate. The slags are processed in several steps involving crushing the slags into particles, recovering any metal particles or particles having a higher metal content and subsequently treating the remaining slag aggregate with water to reduce its free lime content. The swelling of the slag aggregate is thereby reduced so that it can be used to produce concrete and asphalt. However, it takes some months to achieve acceptable reduction in swelling. Consequently, it is not only costly to spray water for such a long time over the steel slag material but also a large storage space has to be available for storing the steel slag material during the free lime/dolime neutralization process. Several methods to accelerate the decrease in free lime content of steel slags have therefore been developed in the past years.

FR 2 735 767 discloses for example an accelerated method for preparing an aggregate for use in civil engineering operations starting from LD slags. The slags are first crushed, and selected fractions are subsequently treated under an atmosphere enriched with carbon dioxide. This process allows for carbonation of the granular material leading to the formation of a waterproofing crust. When this crust remains intact, it may prevent ingress of water into the particles and thus further swelling of the material. This method is however costly as it implies transferring the starting material into a confined space and under controlled atmospheric conditions. Furthermore, another drawback of the method is the fact that, after carbonation the granular material may not be damaged, as this would disrupt the waterproofing crust at the surface of the material. It can moreover not be assured that when applying the carbonated aggregate material in moist conditions, water may diffuse into the particles still leading to a swelling and cracking of the particles.

US 2007/0068425 discloses a process for reducing the volumetric expansion of steel slags through a dual action: active aeration and hydration. Aeration is achieved by moving heaps of the slag with a plough or a bulldozer thereby mixing the material and causing acceleration of the carbonation of the free magnesium and calcium oxides by increasing the slag's contact with atmospheric air. Simultaneously to the aeration process, a hydration process is performed through water aspersion, thereby accelerating the hydration of the oxides contained in the slags. However, this process is quite labor-intensive as these procedures need to be done daily in order to obtain an acceleration of the process.

US 2009/0260542 describes a method for producing an aggregate from steel slags suitable for use in civil engineering applications. The method involves reacting steel-making slags (LD or EAF slags) with iron-sulfate additives, thereby reducing the free lime content to acceptable levels. However, this process is difficult to perform on an industrial scale since the chemical reaction between the steel-making slags and the additives needs to be performed in a high-speed mixer. Moreover, the reaction requires a large amount of chemicals, which increases the cost of the process.

An object of the present invention is therefore to provide a new method for producing an alkaline aggregate wherein the ageing process of the alkaline material can be accelerated without requiring additional labor-intensive steps during the ageing of the alkaline material and without requiring the use of large amounts of chemical additives.

To this end, the method according to the present invention is characterized in that at least said portion of the granular alkaline material is treated with an aqueous medium which contains at least one antiscalant to accelerate said ageing of the granular alkaline material.

The alkaline material, or alkaline aggregate, has in particular a solution pH of at least 8.3. The solution pH of the alkaline material is defined as the pH of demineralised water wherein the granular alkaline material has been immersed for 18 hours in a liquid/solid ratio of 4.5. The granular alkaline material comprises a granular stainless steel-making slag material different from a blast furnace slag, in particular a stainless steel-making slag material.

As defined in ASTM D6161 an antiscalant is a compound added to water that inhibits the precipitation of sparingly soluble inorganic salts. These are in particular calcium carbonate and magnesium carbonate. The aqueous medium in particular contains an amount of said at least one antiscalant which is effective to accelerate the reduction of the swelling percentage.

Ageing involves penetration of water within the granular alkaline material to hydrate the free calcium and/or magnesium oxides contained therein. For steel-making slag materials, depending on the type of the steel-making slag material, and especially on the free lime, dolime or magnesia content thereof, it usually takes several months or even one year, to hydrate steel-making slag particles until their swelling percentage is reduced to less than 1.5% or less than 1%, whatever maximum swelling percentage is allowed. Especially the hydration of magnesia is a slow process and takes a lot of time. According to the invention, it has been found that addition of an antiscalant to the aqueous medium which is used to treat the particles of the alkaline material allows to accelerate the ageing process.

The present inventors consider that the presence of the antiscalant especially in the pores of the granular alkaline material may prevent blocking of the pores thereof. Keeping the pores of the alkaline material more or longer open might be important to obtain the accelerated ageing of the alkaline material. The aggregate fraction of steel-making slag material has for example only a small porosity so that water can only slowly penetrate into the slag particles. The presence of a small amount of antiscalant, in particular an amount of antiscalant which may delay the onset of crystallization (nucleation phase of crystallization) of carbonates and/or retard the growth of the carbonate crystals, can thus have a substantial effect on the hydration rate of the free oxides in the particles of the granular alkaline material.

The granular alkaline material may be treated with said aqueous medium during said ageing step, said water being at least partially contained in said aqueous medium.

By using an antiscalant, the ageing process can be accelerated without having to lower the pH of the water used to hydrate the free oxides.

Alternatively, or additionally, the granular alkaline material may be treated with said aqueous medium in a further step wherein at least said portion of the granular alkaline material is immersed and agitated in said aqueous medium, which immersing and agitating step is performed before said ageing step.

Surprisingly, only a short treatment time of the granular alkaline material with the antiscalant appeared to be necessary when immersing and agitating the granular alkaline material in the aqueous medium to achieve a substantial acceleration of the ageing process.

In an embodiment of the method according to the invention, the granular alkaline material is agitated in said aqueous medium for at least 10 seconds, preferably for at least 20 seconds and more preferably for at least 30 seconds.

In an embodiment of the method according to the invention, the granular alkaline material is agitated in the aqueous medium for at most 20 minutes, preferably for at most 15 minutes, and more preferably for at most 10 minutes.

With such treatment times, optimal activity of the antiscalant can be achieved, while at the same time avoiding lengthy processing steps and large installations.

The agitation step can be performed in accordance with a batch or a continuous process. It is understood that in case of a continuous process the agitation times described above refer to the average time residence time of the alkaline material in the aqueous medium.

In an embodiment of the method according to the invention, the immersing and agitating step is performed in a wet jigging apparatus, or a so-called jig, which contains the aqueous medium wherein the granular alkaline material is immersed and agitated. In order to improve the separation process in the wet jigging apparatus, the aqueous medium contained therein is preferably agitated therein at a frequency greater than 0.1 Hz, preferably greater than 0.5 Hz and more preferably greater than 0.7 Hz, but smaller than 15 Hz, and preferably smaller than 7 Hz.

The granular alkaline material is in particular separated in said wet jigging apparatus into at least one lighter fraction and into at least one heavier fraction. For steel-making slag materials, the heavier fraction has a higher steel content than the lighter fraction. The lighter fraction is used to provide said portion of the granular alkaline material which is subjected to said ageing step. The lighter fraction may be subjected in its entirety to the ageing step or only one or more fractions thereof which are obtained by sieving the lighter fraction into one or more fractions. A fine fraction, for example a 0 to 2 mm fraction, may for example be removed by sieving from the lighter fraction.

The functional features of a wet jigging apparatus are for example described in EP 1 312 415. The wet jigging treatment allows the division or segregation of the high- and low-density materials settling on each other. The high-density material, having a higher steel content, will form a "heavier fraction", whereas the low-density material will form a "lighter fraction. It is therefore possible in a jig to recover the valuable steel material from the remaining slag fraction. Despite the short residence time of the particles in the jig, the strong agitation therein, in combination with the antiscalant contained in the aqueous medium, was found to be sufficient to provide a substantial acceleration of the subsequent ageing process of the aggregate material.

In an embodiment of the method according to the invention, the granular alkaline material comprises a granular steel-making slag material, preferably a granular stainless steel-making slag material.

Stainless steel slags have the advantage of generally containing less free oxides than, for example, LD slags, so that the swelling percentage thereof can be reduced more quickly and/or to a lower value. Stainless steel-making slag aggregates are therefore safer to use as aggregate in road or building constructions.

In an embodiment of the method according to the invention, the ageing step is performed by spraying water, preferably the aqueous medium which contains the antiscalant, onto said portion of the granular alkaline material, preferably onto heaps of the granular alkaline material.

Such ageing procedure has the advantage of requiring minimal labor and less costly infrastructure. By using the antiscalant in the spray water, and preferably also in the aqueous medium wherein the alkaline material is immersed and agitated, a relatively quick hydration of the free oxides can be achieved by simply spraying water onto the heaps of the alkaline material during the (natural) ageing thereof.

In an embodiment of the method according to the invention, the alkaline material which is treated with said aqueous medium comprises more than 90 wt. % particles having a particle size of between 1 and 50 mm, preferably more than 90 wt. % particles having a particle size of between 1.5 and 30 mm and more preferably more than 90 wt. % particles having a particle size of between 2 and 20 mm.

In an embodiment of the method according to the invention, the method comprises, after the ageing of the granular alkaline material, the further step of separating the material into at least two different fractions having different particle sizes.

In this way, the different fractions can be used for different applications, requiring different particle sizes. On the other hand, a fine fraction produced by cracking of some of the initial particles of the alkaline material can be sieved out to obtain the desired coarser aggregate.

In an embodiment of the method according to the invention, the pH of said aqueous medium is higher than 9.0, preferably higher than 10.0, more preferably higher than 10.5 and most preferably higher than 11.

Maintaining a high pH can foster the activity of the antiscalant by reducing the dissolution of calcium hydroxides (Ca(OH)₂) and magnesium hydroxides (Mg(OH)₂) and thereby the concentration of ionic calcium (Ca²⁺) and magnesium (Mg²⁺) in solution in the aqueous medium.

Preferably, the immersion and agitation step is performed in a container, which contains the aqueous medium, the aqueous medium contained in the container being recirculated over a buffer reservoir, and the antiscalant being replenished into the aqueous medium which its being supplied from the reservoir to the container (i.e. to the aqueous medium which has already been taken out of the buffer reservoir to be supplied to the container) and/or into the aqueous medium which is contained in the container.

Due to the high pH of the steel-making slag material, such recirculation allows to achieve a high pH of the aqueous medium, without the need to add further alkaline additives to the aqueous medium. Adding the antiscalant to the aqueous medium contained in the container wherein the slag material is immersed and agitated, or to the aqueous medium which has already been taken out of the buffer reservoir to be supplied to the container (by dosing the antiscalant into the pipe through which the aqueous medium is fed into this container), appeared to be much more effective, especially in case of a quite large buffer reservoir, compared to adding the antiscalant to the buffer reservoir itself.

More preferably, the ageing step is also performed with the aqueous medium from the buffer reservoir. The aqueous medium is then applied onto the granular alkaline material which is being aged and is allowed to percolate through this granular alkaline material. The percolated aqueous medium is captured and further recycled to the buffer reservoir.

Due to the high pH of the alkaline material which is being aged, such recirculation also contributes to achieving a high pH of the aqueous medium.

Even more preferably, a further antiscalant is added to the aqueous medium which is supplied from the buffer reservoir to the portion of the alkaline material which is being aged, in particular to the aqueous medium which is applied onto this portion of the granular alkaline material.

This further accelerates the hydration of the free oxides.

In an embodiment of the method according to the invention, the aqueous medium used to treat the granular alkaline material contains the at least one antiscalant in a total amount of at least 0.5 ppm, preferably of at least 1.0 ppm and more preferably of at least 2.0 ppm.

The expression "total amount of antiscalant" refers either to the amount of antiscalant, i.e. of active ingredient, when the aqueous medium contains only one antiscalant, or to the sum of the amounts of the antiscalants, i.e. of the active ingredients thereof, when the aqueous medium contains more than one antiscalant.

In an embodiment, the antiscalant which is added to the aqueous medium is selected from the group comprising polyphosphates, phosphonic acids, polycarboxylic acids, in particular homopolymers or copolymers derived from ethylenically unsaturated monomers which are comprising at least one carboxylic functional group; homopolymers or copolymers derived from ethylenically unsaturated monomers which are comprising at least one sulfonic, sulfuric, phosphonic, or phosphoric acid functional group, and salts thereof, preferably polyphosphates, phosphonic acids, homopolymers or copolymers derived from ethylenically unsaturated monomers which are comprising at least one carboxylic functional group, and salts thereof.

Among ethylenically unsaturated monomers comprising at least one carboxylic functional group mention may be made of acrylic acid, methacrylic acid, methyl methacrylic acid, maleic acid, fumaric acid, itaconic acid, or aspartic acid. Among the ethylenically unsaturated monomers comprising at least one carboxylic functional group, acrylic acid or methacrylic acid may be favoured.

Among ethylenically unsaturated monomers comprising at least one sulfuric or sulfonic functional group, mention may be made for instance of vinyl sulfonic acid, allyl sulfonic acid, styrene, sulfonic acid, benzene sulfonic acid, methylallyl sulfonic acid, 1 -propane sulfonic acid, 2-acrylamido-2-methyl-1-propane sulfonic acid, or 3-[N,N-dimethylvinylbenzylammonio)propane sulfonic acid and their corresponding sulfate analogs.

Among ethylenically unsaturated monomers comprising at least one phosphonic acid functional group mention may be made of vinyl phosphonic acid, 2-methoxyethylphosphonic acid, or 2-(methacryloyloxy)propylphosphonic acid.

Preferred homopolymers derived from ethylenically unsaturated monomers which are comprising at least one carboxylic functional group, and salts thereof, are poly (acrylic acid), poly (methacrylic acid), poly (maleic acid) and poly (aspartic acid) and salts thereof.

Preferred copolymers derived from ethylenically unsaturated monomers which are comprising at least one carboxylic functional group, are those in which the ethylenically unsaturated monomers comprising at least one carboxylic functional group are copolymerised with ethylenically unsaturated monomers comprising at least one sulfonic, sulfuric, phosphonic, or phosphoric acid functional group or mixtures thereof.

Such antiscalants appeared to be effective in accelerating the ageing process of the alkaline material.

The polyphosphates are in particular polyphosphates as identified in NEN-EN 15041 :2014, the phosphonic acids and salts thereof are in particular phosphonic acids and salts thereof as identified in NEN-EN 15040:2014. The polycarboxylic acids are in particular homopolymers or copolymers derived from ethylenically unsaturated monomers comprising at least one carboxylic functional group, and salts thereof as identified in NEN-EN 15039:2014.

Finally, the invention is also directed to the use of at least one antiscalant to accelerate hydration of at least part of the free calcium and/or magnesium oxides contained in a granular alkaline material to reduce the swelling percentage thereof to a value which is smaller than 1.5%, preferably smaller than 1%, which swelling percentage is determined according to standard NBN EN 1744-1 (2013), article 19.3.

Other particularities and advantages of the invention will become apparent from the following description of some particular embodiments of the method according to the present invention. The reference numerals used in the description relate to the annexed drawings wherein:
Figure 1 schematically illustrates an installation for carrying out a method according to the present invention, which installation comprises a jig wherein a granular steel-making slag material is immersed and agitated in an aqueous medium;
Figure 2 shows schematically the jig of the installation illustrated in Figure 1 on a larger scale;
Figure 3 is a graph showing the reduction of the swelling percentage of a granular steel-making slag aggregate over a determined period of time of ageing obtained in a comparative experiment wherein no antiscalant is added to the jig nor to the water used during the ageing process of the slag aggregate; and
Figures 4 and 5 are graphs showing the reduction of the swelling percentage of a granular steel-making slag aggregate over a determined period of time of ageing obtained in the two experiments wherein an antiscalant is added to the water used in the jig and to the water used during the ageing process.

The present invention relates in general to a method for producing an alkaline aggregate with a reduced swelling capacity starting from a granular alkaline material having a higher swelling capacity. The alkaline material is preferably a by-product, in particular a by-product which has the required mechanical properties to be used as aggregate in concrete, asphalt or other construction materials. The by-product may comprise bottom ash and/or a steel-making slag. The steel-making slag material may be a slag material produced during the production of carbon steel but is preferably a slag material produced during the production of stainless steel, in particular EAF slag, AOD slag or VOD slag. Steel-making slag material is commonly generated during the production of steel, and forms a protective layer on the steel bath, thereby protecting the molten steel against oxidation. The slag material also purifies the steel by absorbing oxides and impurities. In addition to the actual slag material, steel-making slags also contain steel particles of different sizes, which can be recycled.

In order to valorise bottom ashes but especially the steel slags as much as possible, for example in civil engineering applications, the contents of free oxides of calcium and/or magnesium of the slags have to be reduced. It has indeed been observed that these oxides may, after exposure to moisture, swell and cause deformations or cracks in concrete or asphalt wherein the granular steel-making slag material has been incorporated for example for road building. In this regard, it is preferable to use steel-making slag material derived from the production of stainless steel, as it generally inherently contains less free oxides compared to other types of commonly used steel-making slags. In all cases, in order for the granular steel-making slag material to be suitable for use as raw material in, for example, construction materials, its swelling percentage has to be reduced to a value which is smaller than 1.5%, more preferably smaller than 1%, determined according to standard NBN EN 1744-1 (2013), article 19.3.

In practice, liquid steel-making slags are first poured in pits to solidify. The solidified slags are then broken and further crushed in one or more steps and sieved to produce a granular steel-making slag material 1. During the production of this granular slag material most of the steel particles are removed therefrom manually and by magnetic separation techniques. Suitable processes to this end are known for the skilled person and are for example described in EP 3 122 909 and EP 1 146 022.

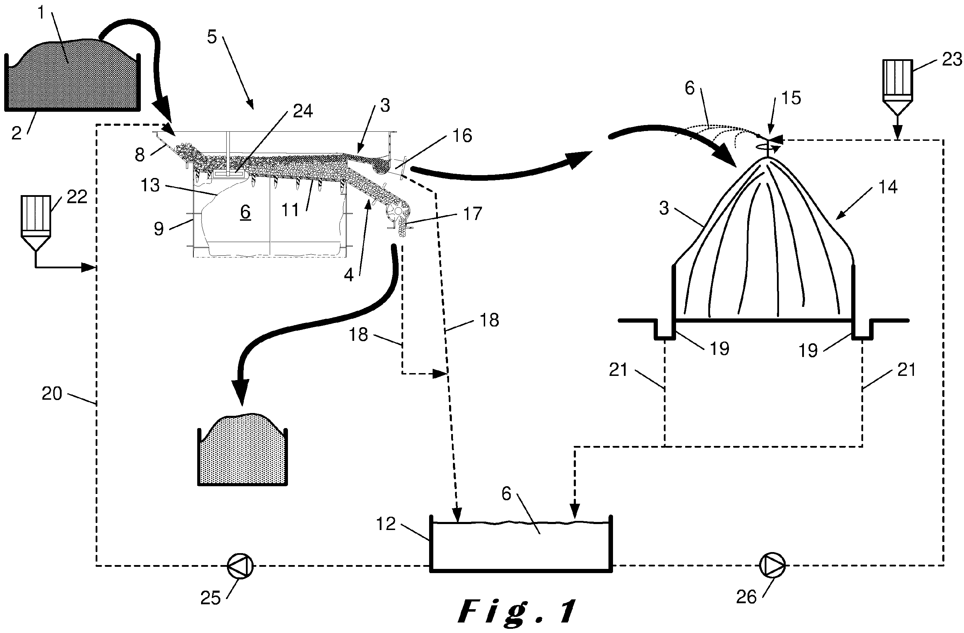

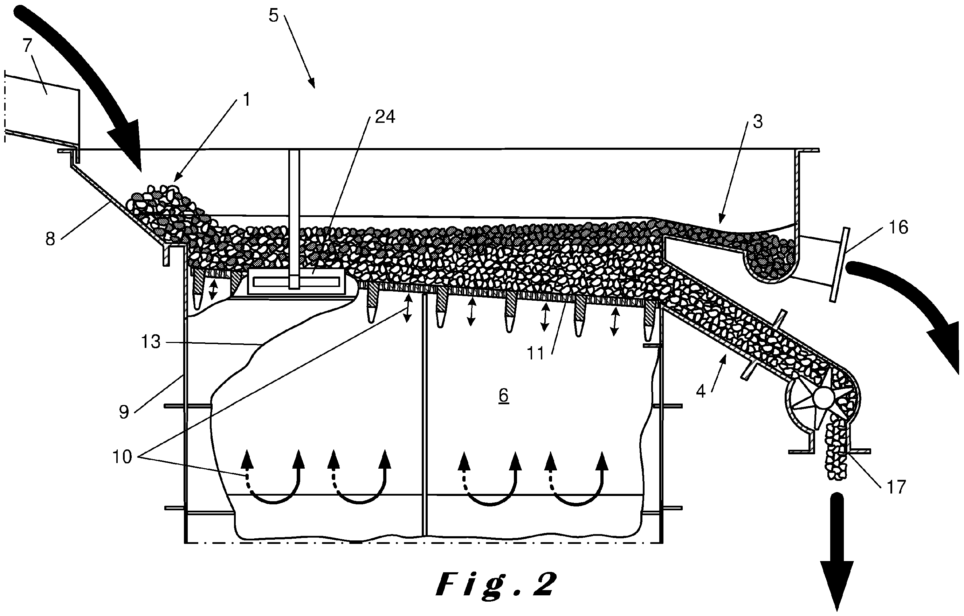

As illustrated in Figure 1, the granular steel-making slag material 1 can be stored temporarily in a bunker 2. It preferably comprises more than 90 wt. % particles having a particle size of between 1 and 50 mm, preferably between 1.5 and 30 mm and more preferably between 2 and 20 mm. The granular steel-making slag material 1 may comprise for example a 2 to 10 mm fraction, or a 2 to 14 mm fraction, of the crushed steel-making slag material. To recover further steel from this steel slag material 1, it can be subjected to a jigging step, in a wet jigging apparatus 5, wherein the slag material is divided in a lighter fraction 3 and heavier fraction 4. The heavier fraction comprises steel particles whereas the lighter fraction comprising slag particles. The wet jigging apparatus or jig 5 allows to carry out the separation between these two fractions based on the difference in density (i.e. specific weight) of steel and of slag material. As shown schematically in Figure 2, the granular steel-making slag material 1 and water 6 used to carry out the density separation step is transported through a gutter-shaped feeder 7 to the inlet of the jig. The inlet of the jig consists of an oblique plate 8, on which the mixture of the granular steel-making slag material 1 and the water 6 slide into a container 9 formed by the jig 5. The water 6 and slag material 1 contained in the container 9 are subjected to vibrations ("jigged") using a pulsation machine 24. This pulsation machine 24 may be a pneumatic pulsation machine and is situated behind a partition wall 13 dividing the container 9 in two compartments. The partition wall 13 does not extend to the bottom of the container 9 so that an opening is formed connecting both compartments. The pulsation machine generates a pulsating motion in the water 6 which is illustrated by means of the double arrows 10. Separation of the materials is based on the fact that particles in the bed of slag particles provided on an inclined grid 11 in the upper portion of the jig 5 stratify in pulsating water. The upward and downward pulsating currents fluidize and compact the particles in the bed of slag particles into relatively homogeneous layers. Low density particles stratify on the surface of the bed of slag particles, while higher density particles settle to the lower level of the bed, on the grid 11.

The jig 5 has an upper outlet 16, for the lighter fraction 3, and a lower outlet 17 for the heavier steel fraction 4. Both fractions have only been illustrated schematically in Figure 2. Together with these fractions, water 6 also flows through both outlets 16, 17 out of the jig 5. The water 6 is removed from the lighter and the heavier fractions and is led via pipes 18 to a buffer reservoir 12. The water from this buffer reservoir 12 is recycled to the inlet of the jig 5 via pump 25 and pipe 20.

The lighter fraction 3 still comprises an amount of slag particles that have a higher steel content. These slag particles are preferably removed magnetically from the lighter fraction 3 before it is stockpiled in the form of heaps 14. Alternatively, the slag particles that have a higher steel content can be removed from the lighter fraction 3 by means of a second jig which can be adjusted to enable the removal of the heavier particles from the lighter fraction 3. The lighter fraction 3 is then subjected to a water-treatment in a process commonly referred to as 'ageing'. During this ageing process, water will penetrate within the granular steel-making slag material 1 and hydrate the free oxides of calcium and/or magnesium contained therein. Calcium oxide's affinity for water is higher than that of magnesium oxide so that the free calcium oxide may already have been neutralised at least partly in the previous production steps, for example when the slag material is cooled down by spraying water on it and especially also during and after the wet jigging step when the slag material is still wet. Magnesium oxide, or mixed oxides of magnesium and calcium, take however much more time to hydrate.

The ageing step is preferably performed by spraying water 3 onto the heaps 14. Spraying of the water can be performed by making use of sprinklers 15 or the like.

Preferably, the water 6 contained in the buffer reservoir 12 is used to spray on the heaps 14 of slag material which is being aged, and is therefore recirculated via pump 26 and pipes 21 over the same buffer reservoir 12 as that used to recirculate the water of the jig 5. After being applied onto the heaps 14, the water 6 which percolated through the heaps 14 is captured through a water collection system 19, and is recycled to the buffer reservoir 12. The water 6 can either be sprayed continuously or intermittently onto the heaps 14 to keep the particles of the granular steel-making slag sufficiently wet for the hydration reaction.

The ageing of the steel-making slag material 3 has to be carried out until the swelling percentage of the slag material 3, as determined according to standard NBN EN 1744-1 (2013), article 19.33, is sufficiently low so that the slag material 3 can be used as slag aggregate for cementitious of bituminous building materials. The swelling percentage should be smaller than 1.5%, and preferably smaller than 1%. Especially due to the presence of free magnesium oxides, or free calcium/magnesium oxides, the minimum ageing period to achieve the required reduction of the swelling percentage may comprise several months. A drawback of such a long ageing period is not only that the production of the steel-making slag aggregates takes a long time but also that a lot of storage space has to be provided for the large heaps which need to be aged.

In accordance with the present invention, it has been found that the minimum ageing period can be reduced by the use of an antiscalant during the immersing and agitating step and/or during the ageing step. In the method illustrated in the drawings, the immersing and agitation step is carried out in the container 9 of the jig 5, the aqueous medium being formed by the water 6 contained in the jig 5. The steel-making slag material 1 which is immersed and agitated in the aqueous medium 6 preferably comprises more than 90 wt. % particles having a particle size of between 1 and 50 mm, preferably between 1.5 and 30 mm and more preferably between 2 and 20 mm. The steel-making slag material 1 fed to the jig comprises for example a 0 to 10 mm fraction, or a 0 to 14 mm fraction of the crushed steel-making slag material. The granular steel-making slag material 1 is preferably agitated in the aqueous medium 6 for at least 10 seconds, preferably for at least 20 seconds and more preferably for at least 30 seconds. It is preferably agitated in the aqueous medium 6 for at most 20 minutes, preferably for at most 15 minutes and more preferably for at most 10 minutes. The agitation times are determined by the average residence time of the slag material 1 in the jig 5.

The antiscalant is a compound added to water that inhibits the crystallization of sparingly soluble inorganic salts, in particular of calcium carbonate and magnesium carbonate, by delaying the onset of the crystallization, i.e. the nucleation, and/or by retarding the crystal growth. The aqueous medium in particular contains an amount of said at least one antiscalant which is effective to accelerate the reduction of the swelling percentage. In particular, the amount of antiscalant is preferably effective to reduce the minimum ageing time required to reduce the average swelling percentage of the alkaline material to 0.75%, in particular to reduce this minimum ageing time with at least 10%, preferably with at least 20%. The average swelling percentage is determined by taking each day one sample of the alkaline material, by measuring the swelling percentage thereof in accordance with NBN EN 1744-1 (2013) and by calculating the average value of the swelling percentages over the last seven days.

The aqueous medium used to treat the granular alkaline material 1 contains preferably the antiscalant or antiscalants in a total amount of at least 0.5 ppm, preferably of at least 1.0 ppm and more preferably of at least 2.0 ppm. The total amount of antiscalants in the aqueous medium is preferably smaller than 100 ppm, more preferably smaller than 50 ppm. The amount of antiscalant is the total amount of active ingredients, i.e. of the scale inhibitors, contained therein.

The antiscalant is preferably selected from the group comprising polyphosphates, phosphonic acids, polycarboxylic acids and salts thereof. The antiscalant is more preferably selected from the group consisting of:
- a tripolyphosphate, such as (STPP) Na₅P₃O₁₀;
- a hexametaphosphate, such as (SHMP) (NaPOs)s;
- amino tri (methylene phosphonic acid) (ATMP) N(CH₂PO₃H₂)₃;
- 1-hydroxyethylidene-1,1-diphosphonic acid (HEDP) CH₃C(PO₃H₂)₂OH;
- ethylenediamine tetra(methylene phosphonic acid) (EDTMP) (PO₃H₂CH₂)₂N(CH₂)₂N(CH₂PO₃H₂)₂;
- hexamethylenediamine tetra(methylene phosphonic acid) (HMTMP) (CH₂PO₃H₂CH₂)₂N(CH₂)₆N(CH₂PO₃H₂)₂;
- diethylenetriamine penta(methylene phosphonic acid) (DETMP) N(CH₂)PO₃H₂[(CH₂)₂N(PO₃H₂)₂]₂;
- 2-phosphonobutane-1,2,4-tricarboxylic acid (PBTC) CH₂COOHC(PO₃H₂)COOH(CH₂)₂COOH;
- poly (acrylic acid) (PAA) (CH₂CHCOOH)ₙ;
- poly (methacrylic acid) (PMAA) (CH₂C(CH₃)COOH)ₙ; and
- poly (maleic acid) (PMA) (CHCOOHCHCOOH)ₙ.

The antiscalant is preferably dosed via a dosing apparatus 22 in the pipe 20 feeding the aqueous medium 6 from the buffer reservoir 12 to the jig 5. Alternatively, the antiscalant could also be dosed directly into the container 9 of the jig 5. By the continuous circulation of the aqueous medium 6 through the jig 5, a substantially constant concentration of antiscalant is maintained therein when dosing the antiscalant continuously into this aqueous medium 6.

The aqueous medium 6 wherein the alkaline material 1 is immersed and agitated has preferably a relatively high pH, in particularly a pH higher than 9, preferably higher than 10, more preferably higher than 10.5 and most preferably higher than 11. With such high pH values, the concentration of calcium ions and magnesium ions is very small in the aqueous medium due to the high concentration of hydroxyl ions. Such a low concentration of calcium and magnesium ions in the aqueous medium might the effect of the quite small amounts of antiscalant in the aqueous medium.

The high pH of the aqueous medium 6 can be achieved automatically in the jig 5 by recirculating the aqueous medium or water 6 via the pipes 18, 20 over the jig 5 and the buffer reservoir 12. Recirculating the aqueous medium or water 6 via the pipes 21 over the heaps 14 also causes an increase of the pH of the aqueous medium 6.

Preferably, an antiscalant is also dosed by means of a dosing apparatus 23 in the pipes 21 feeding the water from the buffer reservoir 12 to the sprinklers 15. In this way, further antiscalant is applied onto the granular material 3. The antiscalant dosed into the water 6 used for ageing the granular material 3 may be the same of different from the antiscalant which is dosed in the aqueous medium 6 in the jig 5.

In the above described embodiment, the antiscalant is fed into the water contained in the jig 5. Alternatively, especially when no jig 5 is used for example because the heavier fraction 4 is not separated from the lighter fraction 3, the slag material 1 may also be led through a bath which contains the antiscalant and wherein the slag material is stirred or otherwise agitated. Agitating the slag material 1 in the jig 5 is however preferred since no additional treatment step is thus required to treat the slag material 1 with the antiscalant.

### Experiments

In the following experiments, a granular stainless steel-making slag 1 was produced by comminuting slag material originating from a stainless steel factory and by subjecting the comminuted slag material to several crushing and sieving steps, until a stainless steel slag fraction was obtained having a particle size of between 2 and 10 mm. This steel slag fraction was separated by means of a jig into a lighter slag fraction and a heavier metal fraction. The residence time of the steel slag fraction in the jig was about 0.5 to 1 minute. Heavier particles were removed magnetically from the lighter fraction which left the jig and the remaining lighter fraction was subsequently stockpiled in a large heap, in a box, of 20 to 25000 tons. During the ageing of the slag material in this heap, after the box has been filled, it was continuously sprayed with water by means of a sprinkler installed on top of the heap. The water used for the jig and for the sprinkler was supplied from the same buffer reservoir and had a pH of between 12 and 13.

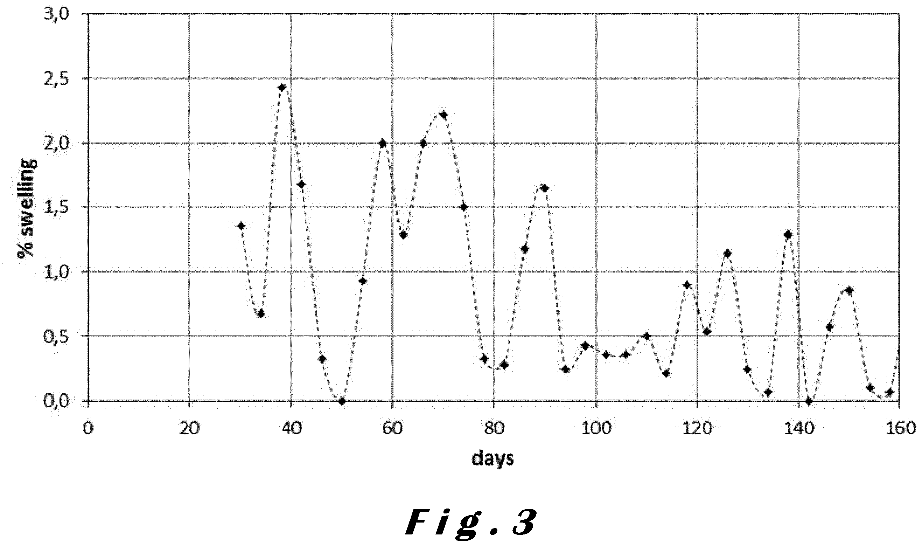

In the first, comparative experiment, no antiscalant was used. Figure 3 shows the swelling percentages which are determined as from the fifth week of the ageing period with the antiscalant being added only to the water supplied to the sprinkler. The measurements were done every four days.

It can be seen that it took at least 5 to 6 months before the swelling percentage dropped consistently below 1.0%.

In the next two experiments an antiscalant was added to the water fed to the sprinkler and to the water fed to the jig. Use was made of Antiprex^{®} D (BASF) which contained 40 wt.% of low molecular weight sodium salt of polyacrylic acid as active ingredient. The Antiprex^{®} D was dosed in an amount of 3.3 ml/m³ of water fed to the sprinkler and in an amount of 5.75 ml/m³ of water fed to the jig.

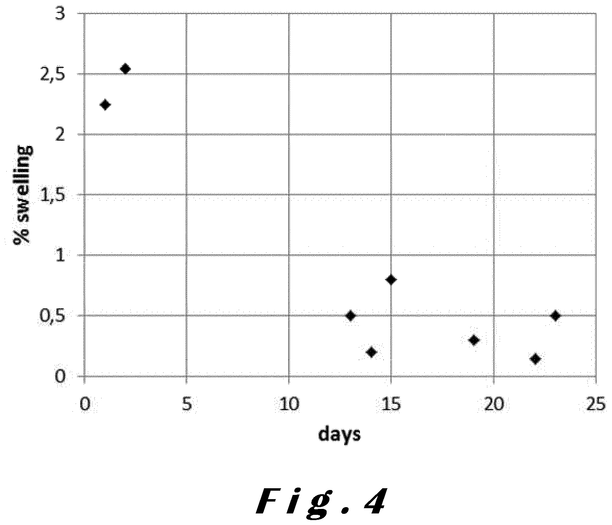

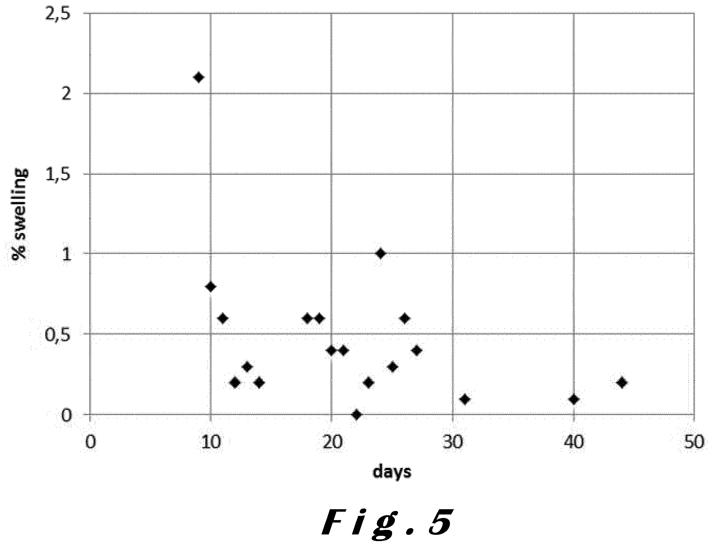

Figures 4 and 5 shows the swelling percentages which are determined as from the day at which the box was filed and spraying with water was started. It can be seen that initially the swelling percentage was higher than 2% but that this swelling percentage dropped quickly, within a number of days, below 1%. After about one month, the swelling percentage was even consistently lower than 0.75%.

A further experiment was done wherein Antiprex^{®} D was replaced by Depositrol^{®} BL5600 which contained 2-phosphonobutane-1,2,4-tricarboxylic acid (PBTC). Depositrol^{®} BL5600 also enabled to accelerate the neutralisation of the free oxides in the stainless steel slag aggregate.

## Claims

1. A method for producing an alkaline aggregate (3), which method comprises the steps of:
- providing a granular alkaline material (1) which comprises a granular steel-making slag material (1), excluding blast furnace slags, and which contains free oxides of calcium and/or magnesium, and
- ageing at least a portion (3) of the granular alkaline material (1), which portion (3) has a predetermined swelling percentage as determined according to standard NBN EN 1744-1 (2013) article 19.3, to reduce this swelling percentage to a value which is smaller than 1.5%, preferably smaller than 1.0%, during which ageing step said portion (3) of said granular alkaline material (1) is treated with water to hydrate at least part of said free oxides,
**characterised in that**
at least said portion (3) of the granular alkaline material (1) is treated with an aqueous medium (6) which contains at least one antiscalant to accelerate said ageing of the granular alkaline material (1).

2. The method according to claim 1, **characterised in that** the granular alkaline material (1) comprises a a stainless steel-making slag material (1).

3. The method according to claim 1 or 2, **characterised in that** the granular alkaline material (1) is treated with said aqueous medium (6) during said ageing step, said water being at least partially contained in said aqueous medium (6).

4. The method according to any one of the claims 1 to 3, **characterised in that** the granular alkaline material (1) is treated with said aqueous medium (6) in a further step wherein at least said portion (3) of the granular alkaline material is immersed and agitated in said aqueous medium (6), which immersing and agitating step is performed before said ageing step.

5. The method according to claim 4, **characterised in that** the granular alkaline material (1) is agitated in said aqueous medium (6) for at least 10 seconds, preferably for at least 20 seconds and more preferably for at least 30 seconds.

6. The method according to claim 4 or 5, **characterised in that** the granular alkaline material (1) is agitated in said aqueous medium (6) for at most 20 minutes, preferably for at most 15 minutes and more preferably for at most 10 minutes.

7. The method according to any one of the claims 4 to 6, **characterised in that** said immersing and agitating step is performed in a wet jigging apparatus (5) which contains the aqueous medium (6) wherein said granular alkaline material (1) is immersed and agitated.

8. The method according to claim 7, **characterised in that** said granular alkaline material (1) is separated in said wet jigging apparatus (5) into at least a lighter fraction (3) and a heavier fraction (4), the lighter fraction (3) providing said portion (3) of the granular alkaline material which is subjected to said ageing step.

9. The method according to any one of the claims 1 to 8, **characterised in that** the ageing step is performed by spraying said water onto said portion (3) of the granular alkaline material (1), preferably onto heaps (14) of said granular alkaline material.

10. The method according to any one of the claims 1 to 9, **characterised in that** the pH of said aqueous medium (6) is higher than 9.0, preferably higher than 10.0, more preferably higher than 10.5 and most preferably higher than 11.0.

11. The method according to claim 10, **characterised in that** said immersing and agitating step is performed in a container (9) which contains said aqueous medium (6), the aqueous medium (6) contained in said container (9) being recirculated over a buffer reservoir (12), said antiscalant being replenished into the aqueous medium (6) which is being supplied from said buffer reservoir (12) to said container (9) and/or into the aqueous medium (6) which is contained in said container (9).

12. The method according to claim 11, **characterised in that** said ageing step is performed with aqueous medium (6) from said buffer reservoir (12), said aqueous medium (6) being applied onto said portion (3) of the granular alkaline material (1) which is being aged and is allowed to percolate through this granular alkaline material, the percolated aqueous medium being captured and being recycled to said buffer reservoir (12).

13. The method according to claim 12, **characterised in that** at least one further antiscalant is added to the aqueous medium (6) which is supplied from said buffer reservoir (12) to said portion (3) of the alkaline material (1) which is being aged, in particular to the aqueous medium (6) which is applied onto this portion (3) of the granular alkaline material (1).

14. The method according to any one of the claims 1 to 13, **characterised in that** said aqueous medium (6) contains said at least one antiscalant in a total amount of at least 0.5 ppm, preferably of at least 1.0 ppm and more preferably of at least 2.0 ppm (all ppm per volume)

15. The method according to any one of the claims 1 to 14, **characterised in that** the alkaline material (1) which is treated with said aqueous medium (6) comprises more than 90 wt. % particles having a particle size of between 1 and 50 mm, preferably between 1.5 and 30 mm and more preferably between 2 and 20 mm.

16. The method according to any one of the claims 1 to 15, **characterised in that** said antiscalant is selected from the group comprising polyphosphates, phosphonic acids, polycarboxylic acids, homopolymers or copolymers derived from ethylenically unsaturated monomers which are comprising at least one sulfonic, sulfuric, phosphonic, or phosphoric acid functional group, and salts thereof.

17. The method according to any one of the claims 1 to 16, **characterised in that** said antiscalant comprises a poly (acrylic acid), poly (methacrylic acid), poly (maleic acid) and/or poly (aspartic acid) or a salt thereof.

18. Use of at least one antiscalant to accelerate hydration of at least part of the free calcium and/or magnesium oxides contained in a granular alkaline material (1) which comprises a granular steel-making slag material (1), excluding blast furnace slags, to reduce the swelling percentage thereof to a value which is smaller than 1.5%, preferably smaller than 1%, which swelling percentage is determined according to standard NBN EN 1744-1 (2013), article 19.3.

## Patentansprüche

1. Ein Verfahren zur Herstellung eines alkalischen Aggregats (3), wobei dieses Verfahren die folgenden Schritte umfasst:
- Bereitstellen eines körnigen alkalischen Materials (1), welches ein körniges Schlackenmaterial (1) aus der Stahlproduktion umfasst, ausgenommen Hochofenschlacken, und welches freie Oxide von Calcium und/oder Magnesium enthält, und
- Auslagern von zumindest einem Anteil (3) des körnigen alkalischen Materials (1), wobei dieser Anteil (3) eine vorbestimmte Quellrate wie bestimmt gemäß Norm NBN EN 1744-1 (2013) Artikel 19.3 hat, um diese Quellrate auf einen Wert zu senken, der geringer ist als 1,5 %, bevorzugt geringer als 1,0 %, wobei während dieses Schrittes des Auslagerns der erwähnte Anteil (3) des erwähnten körnigen alkalischen Materials (1) mit Wasser behandelt wird, um zumindest einen Teil der erwähnten freien Oxide zu hydratisieren,
**dadurch gekennzeichnet, dass**
zumindest der erwähnte Anteil (3) des körnigen alkalischen Materials (1) mit einem wässrigen Medium (6) behandelt wird, das mindestens ein Antiscalant enthält, um das erwähnte Auslagern des körnigen alkalischen Materials (1) zu beschleunigen.

2. Das Verfahren nach Anspruch 1, **dadurch gekennzeichnet, dass** das körnige alkalische Material (1) ein Schlackenmaterial (1) aus der Edelstahlproduktion umfasst.

3. Das Verfahren nach Anspruch 1 oder 2, **dadurch gekennzeichnet, dass** das körnige alkalische Material (1) während des erwähnten Schrittes des Auslagerns mit dem erwähnten wässrigen Medium (6) behandelt wird, wobei das erwähnte Wasser zumindest teilweise im erwähnten wässrigen Medium (6) enthalten ist.

4. Das Verfahren nach irgendeinem der Ansprüche 1 bis 3, **dadurch gekennzeichnet, dass** das körnige alkalische Material (1) mit dem erwähnten wässrigen Medium (6) in einem weiteren Schritt behandelt wird, in dem zumindest der erwähnte Anteil (3) des körnigen alkalischen Materials in das erwähnte wässrige Medium (6) eingetaucht und dort gerührt wird, wobei dieser Schritt des Eintauchens und Rührens vor dem erwähnten Schritt des Auslagerns durchgeführt wird.

5. Das Verfahren nach Anspruch 4, **dadurch gekennzeichnet, dass** das körnige alkalische Material (1) im erwähnten wässrigen Medium (6) mindestens 10 Sekunden lang, bevorzugt mindestens 20 Sekunden lang und noch besser mindestens 30 Sekunden lang gerührt wird.

6. Das Verfahren nach Anspruch 4 oder 5, **dadurch gekennzeichnet, dass** das körnige alkalische Material (1) im erwähnten wässrigen Medium (6) höchstens 20 Minuten lang, bevorzugt höchstens 15 Minuten lang und noch besser höchstens 10 Minuten lang gerührt wird.

7. Das Verfahren nach irgendeinem der Ansprüche 4 bis 6, **dadurch gekennzeichnet, dass** der erwähnte Schritt des Eintauchens und Rührens in einer Nasssetzvorrichtung (5) durchgeführt wird, die das wässrige Medium (6) enthält, worin das erwähnte körnige alkalische Material (1) eingetaucht und gerührt wird.

8. Das Verfahren nach Anspruch 7, **dadurch gekennzeichnet, dass** das erwähnte körnige alkalische Material (1) in der erwähnten Nasssetzvorrichtung (5) in zumindest eine leichtere Fraktion (3) und eine schwerere Fraktion (4) getrennt wird, wobei die leichtere Fraktion (3) den erwähnten Anteil (3) des körnigen alkalischen Materials bereitstellt, der dem erwähnten Schritt des Auslagerns unterzogen wird.

9. Das Verfahren nach irgendeinem der Ansprüche 1 bis 8, **dadurch gekennzeichnet, dass** der Schritt des Auslagerns durchgeführt wird, indem das erwähnte Wasser auf den erwähnten Anteil (3) des körnigen alkalischen Materials (1) gesprüht wird, bevorzugt auf Haufen (14) des erwähnten körnigen alkalischen Materials.

10. Das Verfahren nach irgendeinem der Ansprüche 1 bis 9, **dadurch gekennzeichnet, dass** der pH-Wert des erwähnten wässrigen Mediums (6) höher ist als 9,0, bevorzugt höher als 10,0, noch besser höher als 10,5 und am besten höher als 11,0.

11. Das Verfahren nach Anspruch 10, **dadurch gekennzeichnet, dass** der erwähnte Schritt des Eintauchens und Rührens in einem Behälter (9) durchgeführt wird, welcher das erwähnte wässrige Medium (6) enthält, wobei das im erwähnten Behälter (9) enthaltene wässrige Medium (6) über einen Puffertank (12) zurückgeführt wird, wobei das erwähnte Antiscalant in das wässrige Medium (6), welches vom erwähnten Puffertank (12) zum erwähnten Behälter (9) geleitet wird, und/oder in das wässrige Medium (6), das im erwähnten Behälter (9) enthalten ist, nachgefüllt wird.

12. Das Verfahren nach Anspruch 11, **dadurch gekennzeichnet, dass** der erwähnte Schritt des Auslagerns mit wässrigem Medium (6) aus dem erwähnten Puffertank (12) durchgeführt wird, wobei das erwähnte wässrige Medium (6) auf den erwähnten Anteil (3) des körnigen alkalischen Materials (1) aufgebracht wird, das ausgelagert wird, und dem ermöglicht wird, durch dieses körnige alkalische Material zu sickern, wobei das durchgesickerte wässrige Medium aufgefangen und in den erwähnten Puffertank (12) zurückgeführt wird.

13. Das Verfahren nach Anspruch 12, **dadurch gekennzeichnet, dass** zumindest ein weiteres Antiscalant dem wässrigen Medium (6) zugesetzt wird, welches aus dem erwähnten Puffertank (12) zum erwähnten Anteil (3) des alkalischen Materials (1), das ausgelagert wird, geleitet wird, insbesondere zum wässrigen Medium (6), welches auf diesen Anteil (3) des körnigen alkalischen Materials (1) aufgebracht wird.

14. Das Verfahren nach irgendeinem der Ansprüche 1 bis 13, **dadurch gekennzeichnet, dass** das erwähnte wässrige Medium (6) das erwähnte zumindest eine Antiscalant in einer Gesamtmenge von mindestens 0,5 ppm, bevorzugt von mindestens 1,0 ppm und noch besser von mindestens 2,0 ppm (jeweils ppm pro Volumen) enthält.

15. Das Verfahren nach irgendeinem der Ansprüche 1 bis 14, **dadurch gekennzeichnet, dass** das alkalische Material (1), das mit dem erwähnten wässrigen Medium (6) behandelt wird, mehr als 90 Gew.-% Partikel mit einer Korngröße von zwischen 1 und 50 mm, bevorzugt zwischen 1,5 und 30 mm und noch besser zwischen 2 und 20 mm umfasst.

16. Das Verfahren nach irgendeinem der Ansprüche 1 bis 15, **dadurch gekennzeichnet, dass** das erwähnte Antiscalant ausgewählt ist aus der Gruppe bestehend aus Polyphosphaten, Phosphonsäuren, Polycarbonsäuren, Homopolymeren oder Copolymeren abgeleitet von ethylenisch ungesättigten Monomeren, die mindestens eine funktionelle Sulfon-, Schwefel-, Phosphon- oder Phosphorsäuregruppe, und Salze davon umfassen.

17. Das Verfahren nach irgendeinem der Ansprüche 1 bis 16, **dadurch gekennzeichnet, dass** das erwähnte Antiscalant eine Poly- (Acrylsäure), Poly- (Methacrylsäure), Poly- (Apfelsäure) und/oder Poly- (Asparaginsäure) oder ein Salz davon umfasst.

18. Die Verwendung von mindestens einem Antiscalant, um die Hydratisierung von zumindest einem Teil der freien Calcium- und/oder Magnesiumoxide zu beschleunigen, die in einem körnigen alkalischen Material (1) enthalten sind, welches ein körniges Schlackenmaterial (1) aus der Stahlproduktion, ausgenommen Hochofenschlacken, umfasst, um die Quellrate davon auf einen Wert zu senken, der geringer ist als 1 %, wobei die Quellrate gemäß Norm NBN EN 1744-1 (2013), Artikel 19.3, bestimmt ist.

## Revendications

1. Procédé de production d'un agrégat alcalin (3), lequel procédé comprend les étapes de :
- fourniture d'un matériau alcalin granulaire (1) qui comprend un matériau granulaire de scorie de fabrication d'acier (1), à l'exception des scories de haut fourneau, et qui contient des oxydes libres de calcium et/ou de magnésium, et
- vieillissement d'au moins une partie (3) du matériau alcalin granulaire (1), laquelle partie (3) présente un pourcentage de gonflement prédéterminé tel que déterminé selon la norme NBN EN 1744-1 (2013) article 19.3, pour réduire ce pourcentage de gonflement à une valeur qui est inférieure à 1,5%, de préférence inférieure à 1,0%, durant l'étape de vieillissement, ladite partie (3) dudit matériau alcalin granulaire (1) est traitée avec de l'eau pour hydrater au moins une partie desdits oxydes libres,
**caractérisé en ce que**
au moins ladite partie (3) du matériau alcalin granulaire (1) est traitée avec un milieu aqueux (6) qui contient au moins un agent antitartre pour accélérer ledit vieillissement du matériau alcalin granulaire (1).

2. Procédé selon la revendication 1, **caractérisé en ce que** le matériau alcalin granulaire (1) comprend un matériau de scorie de fabrication d'acier inoxydable (1).

3. Procédé selon la revendication 1 ou 2, **caractérisé en ce que** le matériau alcalin granulaire (1) est traité avec ledit milieu aqueux (6) pendant ladite étape de vieillissement, ladite eau étant au moins partiellement contenue dans ledit milieu aqueux (6).

4. Procédé selon l'une quelconque des revendications 1 à 3, **caractérisé en ce que** le matériau alcalin granulaire (1) est traité avec ledit milieu aqueux (6) dans une étape supplémentaire dans laquelle au moins ladite partie (3) du matériau alcalin granulaire est immergée et agitée dans ledit milieu aqueux (6), laquelle étape d'immersion et d'agitation est effectuée avant ladite étape de vieillissement.

5. Procédé selon la revendication 4, **caractérisé en ce que** le matériau alcalin granulaire (1) est agité dans ledit milieu aqueux (6) pendant au moins 10 secondes, de préférence pendant au moins 20 secondes et plus préférablement pendant au moins 30 secondes.

6. Procédé selon la revendication 4 ou 5, **caractérisé en ce que** le matériau alcalin granulaire (1) est agitée dans ledit milieu aqueux (6) pendant au plus 20 minutes, de préférence pendant au plus 15 minutes et plus préférablement pendant au plus 10 minutes.

7. Procédé selon l'une quelconque des revendications 4 à 6, **caractérisé en ce que** ladite étape d'immersion et d'agitation est effectuée dans un appareil de jiggage humide (5) qui contient le milieu aqueux (6) dans lequel ledit matériau alcalin granulaire (1) est immergé et agité.

8. Procédé selon la revendication 7, **caractérisé en ce que** ledit matériau alcalin granulaire (1) est séparé dans ledit appareil de jiggage humide (5) en au moins une fraction plus légère (3) et une fraction plus lourde (4), la fraction plus légère (3) fournissant ladite partie (3) du matériau alcalin granulaire qui est soumise à ladite étape de vieillissement.

9. Procédé selon l'une quelconque des revendications 1 à 8, **caractérisé en ce que** l'étape de vieillissement est réalisée en pulvérisant ladite eau sur ladite partie (3) du matériau alcalin granulaire (1), de préférence sur des tas (14) dudit matériau alcalin granulaire.

10. Procédé selon l'une quelconque des revendications 1 à 9, **caractérisé en ce que** le pH dudit milieu aqueux (6) est supérieur à 9,0, de préférence supérieur à 10,0, plus préférablement supérieur à 10,5 et encore plus préférentiellement supérieur à 11,0.

11. Procédé selon la revendication 10, **caractérisé en ce que** ladite étape d'immersion et d'agitation est effectuée dans un récipient (9) qui contient ledit milieu aqueux (6), le milieu aqueux (6) contenu dans ledit récipient (9) étant recyclé sur un réservoir tampon (12), ledit agent antitartre étant réapprovisionné dans le milieu aqueux (6) qui est fourni par ledit réservoir tampon (12) audit récipient (9) et/ou dans le milieu aqueux (6) qui est contenu dans ledit récipient (9).

12. Procédé selon la revendication 11, **caractérisé en ce que** ladite étape de vieillissement est réalisée avec un milieu aqueux (6) provenant dudit réservoir tampon (12), ledit milieu aqueux (6) étant appliqué sur ladite partie (3) du matériau alcalin granulaire (1) qui est en cours de vieillissement et qui est autorisée à percoler à travers ce matériau alcalin granulaire, le milieu aqueux percolé étant capturé et étant recyclé dans ledit réservoir tampon (12).

13. Procédé selon la revendication 12, **caractérisé en ce qu'**au moins un agent antitartre supplémentaire est ajouté au milieu aqueux (6) qui est fourni à partir dudit réservoir tampon (12) à ladite partie (3) du matériau alcalin (1) en cours de vieillissement, en particulier au milieu aqueux (6) qui est appliqué sur cette partie (3) du matériau alcalin granulaire (1).

14. Procédé selon l'une quelconque des revendications 1 à 13, **caractérisé en ce que** ledit milieu aqueux (6) contient ledit au moins un agent antitartre en une quantité totale d'au moins 0,5 ppm, de préférence d'au moins 1,0 ppm et plus préférablement d'au moins 2,0 ppm (tous les ppm par volume).

15. Procédé selon l'une quelconque des revendications 1 à 14, **caractérisé en ce que** le matériau alcalin (1) qui est traitée avec ledit milieu aqueux (6) comprend plus de 90 % en poids de particules ayant une taille de particules comprise entre 1 et 50 mm, de préférence entre 1,5 et 30 mm et plus préférablement entre 2 et 20 mm.

16. Procédé selon l'une quelconque des revendications 1 à 15, **caractérisé en ce que** ledit agent antitartre est choisi dans le groupe comprenant les polyphosphates, les acides phosphoniques, les acides polycarboxyliques, les homopolymères ou copolymères dérivés de monomères éthyléniquement insaturés qui comprennent au moins un groupe fonctionnel acide sulfonique, sulfurique, phosphonique ou phosphorique, et leurs sels.

17. Procédé selon l'une quelconque des revendications 1 à 16, **caractérisé en ce que** ledit agent antitartre comprend un poly (acide acrylique), un poly (acide méthacrylique), un poly (acide maléique) et/ou un poly (acide aspartique) ou un sel de ceux-ci.

18. Utilisation d'au moins un antitartre pour accélérer l'hydratation d'au moins une partie des oxydes de calcium et/ou de magnésium libres contenus dans un matériau alcalin granulaire (1) qui comprend un matériau granulaire de scorie de fabrication d'acier (1), à l'exception des scories de haut fourneau, pour réduire le pourcentage de gonflement de celui-ci à une valeur qui est inférieure à 1,5 %, de préférence inférieure à 1 %, lequel pourcentage de gonflement est déterminé selon la norme NBN EN 1744-1 (2013), article 19.3.
